Europäisches Patentamt

European Patent Office

Office européen des brevets

(11) Veröffentlichungsnummer: **0 005 774**
**B1**

(12) **EUROPÄISCHE PATENTSCHRIFT**

(21) Anmeldenummer: **79101526.6**

(22) Anmeldetag: **19.05.79**

(51) Int. Cl.³: **F 28 F 3/12, E 04 B 5/48,**
**E 04 C 2/52**

(54) Plattenförmige Heiz- und/oder Kühleinheit.

(30) Priorität: **26.05.78 DE 2823080**
**27.04.79 DE 2917061**

(43) Veröffentlichungstag der Anmeldung:
**12.12.79 Patentblatt 79/25**

(45) Bekanntmachung des Hinweises auf die Patenterteilung:
**28.01.81 Patentblatt 81/4**

(84) Benannte Vertragsstaaten:
**AT BE CH FR GB NL SE**

(56) Entgegenhaltungen:
**DE - A - 2 705 146**
**DE - A - 2 719 682**
**DE - U - 7 815 839**
**DE - U - 7 832 656**

**RAS Rohr-Armatur-Sanitär-Heizung,**
**Heft 11, 1977,**
**Düsseldorf**
**"Flächenheizung auf der 9. ish"**
**Seite 882**

(73) Patentinhaber: **Dier, Emil**
**Niederbexbacher-Strasse 31**
**D-6680 Neunkirchen-Kohlhof (DE)**

(72) Erfinder: **Dier, Emil**
**Niederbexbacher-Strasse 31**
**D-6680 Neunkirchen-Kohlhof (DE)**
(72) Erfinder: **Kümmel, Bruno**
**Auf dem Kopf**
**D-6682 Ottweiler (DE)**

(74) Vertreter: **Morbe, Kurt**
**Am Gehlenberg 2**
**D-6602 Saarbrücken-Dudweiler (DE)**

Plattenförmige Heiz- und/oder Kühleinheit

Die Erfindung betrifft eine plattenförmige Heiz- und/oder Kühleinheit zum Einbau in Fußböden, Wände und Drecken, mit einer in Schleifen verlegten Heiz- und/oder Kühlleitung, die in Kanälen auf der Oberseite der wärmedämmenden Grundplatte eingebettet ist, wobei diese Grundplatte mit einer oberseitig kunststoffbeschichteten Wärmeleitschicht abgedeckt ist.

Flächenheizungen, vornehmlich solche, die in Trockenbauweise erstellt sind, sollten mit einer möglichst niedrigen Vorlauftemperatur und über einen langen Zeitraum schadlos betrieben werden können. Dies ist aber nur möglich, wenn ein besonders guter Wärmeübergang von der Heizleitung in die zu temperierenden Schichten gegeben ist, und jede sie schädigende Feuchtigkeit von den einzelnen Bauteilen der Einheit ferngehalten bzw. möglichst umgehend entfernt wird.

Es ist ein plattenförmiges Raumheizelement z.B. für Boden- Wand- oder Deckenheizungen bekannt, bei dem die Heizleitungen schleifenförmig in Kanälen auf der Oberseite einer wärmedämmenden Grundplatte eingebettet sind, welche mit einer oberseitig kunststoffbeschichteten Wärmeleitschicht abgedeckt ist. Diese Wärmeleitschicht besteht aus im Abstand nebeneinander verlegten Al-platten, und die Zwischenräume zwischen den einzelnen Platten sind durch einseitig verklebte Alustreifen überdeckt (DE—A—23 46 155).

Diese Wärmeleitbleche erfüllen die Aufgabe, die Wärme über die gesamte zu temperierende Fläche möglichst gleichmäßig zu verteilen in ausreichendem Maße. Es ist aber bei dieser Lösung nicht berücksichtigt, daß die in den Baukörpern noch vorhandene oder später auftretende Feuchtigkeit irgendwie nach außen transportiert werden muß. Diese Feuchtigkeit wird sich u.a. in der unter der Heizleitung bzw. unter der Wärmeleitschicht angeordneten Wärmedämmschicht niederschlagen und damit deren Wirkung zunichte machen. Dasselbe gilt auch für die anderen Schichten der Einheit. Außerdem wird die Wärmedämmschicht mit der Zeit verrotten oder zumindest einen muffigen Geruch annehmen, der sich störend bemerkbar macht. Da diese Feuchtigkeit insbesondere gegenüber Metallen stark aggresiv ist, müßten die Wärmeleitschichten vor ihr geschützt werden, was aber bei der bekannten Lösung nicht der Fall ist.

Aufgabe der vorliegenden Erfindung ist es, eine plattenförmige Heiz- und/oder Kühleinheit zu konzipieren, die folgende Forderungen erfüllt:

a.) Feuchtigkeit darf in die einzelnen Schichten der Einheit weder von außen her eindrigen noch darf es zu Tauwasserbildung infolge von Temperaturunterschieden innerhalb der Einheit kommen,

b.) innerhalb der Einheit auftretende Feuchtigkeit muß umgehend nach außen abgeführt werden,

c.) die für eine gleichmäßige Temperatur sorgenden Wärmeleitschichten müssen gegen Korrosion geschützt sein,

d.) der Korosionsschutz der Wärmeleitschichten darf durch temperaturbedingte Verlängerungen und Verkürzungen dieser Schichten nicht beschädigt werden, und

e.) insbesondere Leckflüssigkeit aus der Heizund/oder Kühlleitung muß möglichst frühzeitig feststell- und exakt lokalisierbar sein, damit beispielsweise nicht der gesamte Fußboden herausgeschlagen werden muß, nur um die Schadstelle zu finden.

Diese Aufgabe wurde gelöst durch die plattenförmige Heiz- und/oder Kühleinheit gemäß dem kennzeichnenden Teile des Hauptanspruchs.

Die mit der Erfindung erreichten Vorteile sind im wesentlichen darin zu sehen, daß die einzelnen Schichten der Einheit weitgehend vor einer Durchfeuchtung geschützt sind, daß trotzdem auftretende Feuchtigkeit umgehend nach außen abgeleitet wied und daß diese Feuchtigkeit durch die mit Durchbrüchen versehene metallische Wärmeleitschicht frühzeitig von außen feststell- und lokalisierbar ist, und daß die Wärmeleitschichten gegen die aggressive Feuchtigkeit so geschützt sind, daß die sie überziehenden Kunststoffhäute infolge ihres geringen Reibungskoeffizienten eine gegenseitige Beschädigung und Knackgeräusche verhindern.

Die Zeichnung erläutert die Erfindung an Ausführungsbeispielen.

Es zeigt:
Fig. 1 einen Querschnitt und
Fig. 2 eine Draufsicht der plattenförmigen Heizund/oder Kühleinheit.
Fig. 3 zeigt eine andere Ausführungsart der Einheit ebenfalls in der Draufsicht.

Auf der Rohdecke 1 liegt die die Heiz- und/oder Kühlleitung 2 tragende und nach unten hin abschirmende, wärmedämmende Grundplatte 3, die dort, wo beispielsweise ein starkes Wärmegefälle dies erfordert, unterseits mit einer Korrosionsbeständigen Dampfsperrschicht 4 belegt ist. Die Grundplatte 3 ist mit schleifenförmig verlaufenden Kanälen 5 zur Aufnahme der Heiz- und/oder Kühlleitung 2 versehen. Zwischen dieser Grundplatte 3 und der Heiz- und/oder Kühlleitung 2 ist eine Wärmeleitschicht 6 angeordnet, die die Leitungen omegaförmig von unten umgreift, und die die gesamte Grundplatte 3 überdeckt. Um die Diffusion der Feuchtigkeit aus der Grundplatte 3 in die oberen Schichten zu ermöglichen, ist die Wärmeleitschicht 6, die aus einer allseitig mit einer Kunststoffhaut überzogenen Al-folie besteht, mitsamt ihrem Überzug fein perforiert. Sie kann aber auch aus einem grobkörnigen, diffusionsfähigen Material oder aus einem engmaschigen Gewebe bestehen und ebenfalls mit einem Schutzüberzug versehen sein. Dieser Kunststoffüberzug soll aber nicht nur die Korrosion der Wärmeleitschicht verhindern, sondern auch die Reibung zwischen den betreffenden aufeinanderliegenden Schichten herabsetzen und damit deren Beschädigung und bei Temperaturänderungen möglicherweise auftretende Knackgeräusche unterbinden.

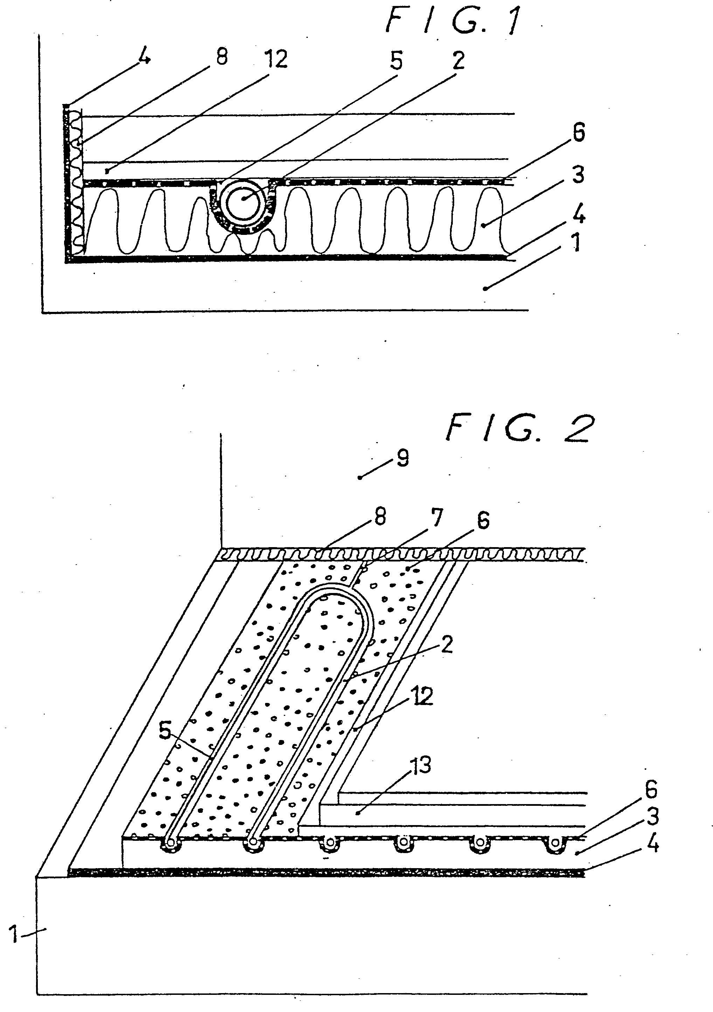

Um der Feuchtigkeit einen Weg nach außen zu verschaffen, sind — nach dem Beispiel gemäß Fig. 2 — Entfeuchtungskanäle 7 vorgesehen, die von den Leitungskanälen 5 weg- und zu den nach oben offenen Randstreifen 8 der sich anschließenden Baukörper, beispielsweise der Wände 9, hinführen. Von dort kann die Feuchtigkeit schadlos verdunsten.

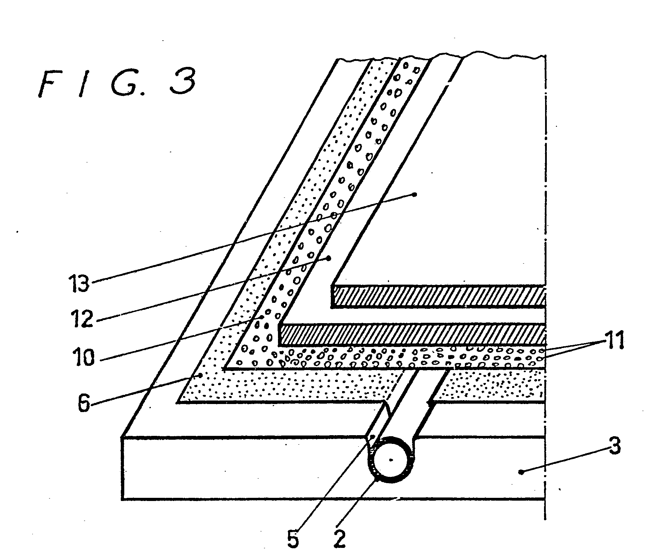

Bei dem Beispiel gemäß Fig. 3 entfallen die Entfeuchtungskanäle 7, die die Feuchtigkeit in die Randstreifen 8 der sich anschließenden Baukörper 9 ableiten sollen. Dafür ist über der dampfdurchlässigen Wärmeleitschicht 6 eine weitere Wärmeleitschicht 10 vorgesehen, die auf der ersteren 6, durch die Abdeckplatten 12, 13 aus schweren mineralischen Werkstoffen belastet, fest aufliegt. Um der aufsteigenden Feuchtigkeit eine Möglichkeit zu schaffen, auch diese Wärmeleitschicht 10 zu durchdringen, ist sie mit größeren Durchbrüchen 11 versehen. Dadurch wird auch verhindert, daß die Perforation der unteren Wärmeleitschicht 6 verschlossen wird.

Gleichzeitig erleichtern diese großen Durchbrüche die Möglichkeit, die Feuchtigkeit von außen her zu orten. Selbstverständlich ist auch die obere Wärmeleitschicht 10 durch aufkaschierte Kunststoffhäute oder dgl. gegen aggressive Feuchtigkeit abgeschirmt. Dabei wird insbesondere die untere Beschichtung dieser Wärmeleitschicht 10 bezüglich ihrer Härte und Oberflächengestaltung so auf die obere Beschichtung der unteren Wärmeleitschicht 6 abgestimmt, daß sich die geringstmögliche Flächenreibung ergibt.

## Patentansprüche

1. Plattenförmige Heiz- und/oder Kühleinheit zum Einbau in Fußböden, Wände und Decken, mit einer in Schleifen verlegten Heiz- und/oder Kühlleitung (2), die in Kanälen (5) auf der Oberseite der wärmedämmenden Grundplatte (3) eingebettet ist, wobei diese Grundplatte (3) mit einer oberseitig kunststoffbeschichteten Wärmeleitschicht (6) abgedeckt ist, dadurch gekennzeichnet, daß die Wärmeleitschicht (6) korrosionsgeschützt und dampfdurchlässig ausgebildet ist und daß auf der Oberseite der Grundplatte (3) von den Kanälen (5) zu den Randstreifen (8) der anschließenden Baukörper (9) führende Entfeuchtungskanäle (7) angeordnet sind, oder dadurch gekennzeichnet, daß oberhalb der kunststoffbeschichteten Wärmeleitschicht (6) eine zweite Wärmeleitschicht (10) angeordnet ist, wobei beide Wärmeleitschichten (6, 10) korrosionsgeschützt und dampfdurchlässig ausgebildet sind, und daß die aus mineralischen Werkstoffen bestehenden Abdeckplatten (12, 13) der Heiz- und/oder Kühleinheit feuchtigkeitsbeständig und dampfdurchlässig sind und die zweite Wärmeleitschicht (10) mit Durchbrüchen (11) versehen ist.

2. Plattenförmige Heiz- und/oder Kühleinheit nach Anspruch 1, dadurch gekennzeichnet, daß die kunststoffbeschichtete Wärmeleitschicht (6) die Leitungen (2) von unten Ω-förmig umgreift und aus einer mit dünnen Kunststoffhäuten beschichteten sowie durchgehend fein perforierten Aluminium-folie besteht.

3. Plattenförmige Heiz- und/oder Kühleinheit nach einem der Ansprüche 1 oder 2, dadurch gekennzeichnet, daß die Unterseite der wärmedämmenden Grundplatte (3) mit einer korrosionsbeständigen Dampfsperrschicht (4) belegt ist, die an den Rändern in den Bereich der Randstreifen (8) der sich anschließenden Baukörper (9) hochgezogen ist.

4. Plattenförmige Heiz- und/oder Kühleinheit nach einem der Ansprüche 1 bis 3, dadurch gekennzeichnet, daß der Korrosionsschutz der Wärmeleitschichten (6, 10) einen geringen Reibungskoeffizienten aufweist.

## Revendications

1. Unité de chauffage et/ou de refroidissement en forme de plaque à incorporer dans les sols, les murs et les plafonds, pourvue d'une conduite de chauffage et/ou de refroidissement (2) posée en boucle et encastrée dans des canaux (5) sur la face supérieure de la plaque de base calorifuge (3), cette plaque de base (3) étant recouverte d'une couche thermoconductrice (6) revêtue de matière plastique, caractérisé en ce que la couche thermoconductrice (6) est conformée de manière anticorrosive et perméable à la vapeur, et que des conduits de déshydratation (7) sont agencés sur la face supérieure de la plaque de base (3) entre les canaux (5) et les bandes latérales (8) des éléments contigus (9), ou caractérisée en ce qu'une seconde couche thermoconductrice (10) est superposée à la couche thermoconductrice (6) à revêtement en matière plastique, les deux couches thermoconductrices (6, 10) étant conformées de manière anticorrosive et perméable à la vapeur, que les plaques de recouvrement (12, 13) de l'unité de chauffage et/ou de refroidissement, constituées de matières minérales, sont résistantes à l'humidité et perméables à la vapeur, et que la seconde couche thermoconductrice (10) est pourvue de perforations (11).

2. Unité de chauffage et/ou de refroidissement en forme de plaque suivant la revendication 1, caractérisée en ce que la couche thermoconductrice (6) à revêtement en matière

5

0 005 774

6

plastique contourne les conduites (2) par le bas, en forme de Ω, et se compose d'une feuille d'aluminium pourvue de fines perforations et recouverte de minces films de matière plastique.

3. Unité de chauffage et/ou de refroidissement en forme de plaque suivant la revendication 1 ou 2, caractérisée en ce que la face inférieure de la plaque de base calorifuge (3) est revêtue d'une couche (4), anticorrosive et imperméable à la vapeur, dont les extrémités sont dirigées vers la haut à hauteur des bandes latérales (8) des éléments contigus (9).

4. Unité de chauffage et/ou de refroidissement en forme de plaque suivant l'une des revendications 1 à 3, caractérisée en ce que la protection anticorrosive des couches thermoconductrices (6, 10) présente un faible coefficient de frottement.

**Claims**

1. Platelike heating and/or cooling system for installation in floors, walls and ceilings with heating and/or cooling pipes running in loops (2) and embedded in channels (5) on the top side of the heat-insulating base plate (3), this base plate (3) being covered with a heat-conductive layer (6) with a plastic coating on its upper surface, characterized by the fact that the heat-conductive layer (6) is corrosion-proof and vapour-permeable and that dehumidifying channels (7) are arranged on the upper side of the base plate (3) which runs from the channels (5) to the edges (8) of the adjacent building structures (9) or characterized by the fact that a second heat-conductive layer (10) is arranged above the plastic-coated heat-conductive layer (6), both heat-conductive layers (6, 10) being corrosion-proof and vapour-permeable, that the cover plates (12, 13) of the heating and/or cooling system, which are made of mineral material, are moisture-proof and vapour-permeable and that the second heat-conductive layer (10) is equipped with openings (11).

2. Platelike heating and/or cooling system according to claim 1, characterized by the fact that the plastic-coated heat-conductive layer (6) embraces the pipes (2) from underneath in the shape of a Ω and consists of an aluminium foil coated with thin plastic sheets and finely perforated throughout.

3. Platelike heating and/or cooling system according to one of the claims 1 or 2, characterized by the fact that the bottom side of the heat-insulating base plate (3) is covered with a corrosion-resistant vapour barrier (4) with its borders carried upward into the area of the edges (8) of the adjacent building structures (9).

4. Platelike heating and/or cooling system according to one of the claims 1 to 3, characterized by the fact that the corrosion proofing of the heat-conductive layers (6, 10) has a low coefficient of friction.

4

F I G. 1

F I G. 2

F I G. 3